# EUROPEAN PATENT SPECIFICATION

(11) **EP 4 101 637 B1**
(45) Date of publication and mention of the grant of the patent: **20.12.2023**
(21) Application number: 21305769.8
(22) Date of filing: 07.06.2021
(51) Int. Cl.: B32B 3/08, B32B 3/26, B32B 3/30, B32B 7/12, B32B 21/02, B60N 2/24, B61D 17/08, B32B 15/10, B60N 2/015, B32B 21/14, B32B 15/08, B32B 21/04, B32B 15/18

(54) **FURNITURE SUPPORTING ASSEMBLY, ASSOCIATED SUPPORTING INSTALLATION AND VEHICLE**
MÖBELTRÄGERVORRICHTUNG, ZUGEHÖRIGE TRÄGERINSTALLATION UND FAHRZEUG
ENSEMBLE DE SUPPORT DE MEUBLES, INSTALLATION DE SUPPORT ASSOCIÉE ET VÉHICULE

(43) Date of publication of application: 14.12.2022
(73) Proprietor: ALSTOM Holdings, 93400 Saint-Ouen-sur-Seine (FR)
(72) Inventor: ALBERT, Torsten, 75017 PARIS (FR); BOESE, Ben, 30459 HANNOVER (DE)
(74) Representative: Lavoix

(56) References cited:
- DE-A1- 19 619 212
- US-A- 1 558 323

## Description

The present invention relates to a furniture supporting assembly for a vehicle, the furniture supporting assembly comprising:
- a wall panel portion, comprising:
   - an external metallic panel,
   - an internal metallic panel, and
   - a wooden panel, arranged between the internal metallic panel and the external metallic panel and connecting the internal metallic panel and the external metallic panel; and
- a support member, adapted to support a furniture piece and comprising :
   - a connection element, and
   - an anchoring element connected to the connection element and to the wall panel portion.

In vehicles, and more particularly in railway vehicles, it is important to provide furniture that is comfortable for the passengers while being robust and easy to maintain. Furniture supporting assemblies are critical to ensure that the furniture meets these requirements.

A typical furniture supporting assembly comprises wall panel portions that are part of a wall of the vehicle. Such a furniture supporting assembly further comprises support members, connected to the wall panel portion, which allow attaching the furniture to the wall of the vehicle.

It is possible to have wall panel portions that are part of a wall formed in a wood-metal composite, comprising a wooden plate sandwiched between metallic panels.

However, such furniture supporting assemblies are not fully satisfactory so far. Indeed, although such assemblies have advantages associated with the weight and the structural properties of the wood-metallic composite wall panel portion, such supporting assemblies do not support high tensile or high compressive forces. Therefore, such supporting assemblies are not adapted to robustly support a wide spectrum of furniture and are in particular not adapted to support cantilever seats.

US-A-1558323 and DE-A-19619212 each discloses wall panels.

An objective of the invention is thus to provide a furniture supporting assembly that is able to support high tensile and/or high compressive forces, in order to robustly support a wide spectrum of furniture, and in particular that is adapted to support cantilever seats.

To that end, the invention relates to a furniture supporting assembly for a vehicle comprising the features of claim 1, wherein the anchoring element is arranged between the wooden panel and the external metallic panel or between the wooden plate and the internal metallic panel, and in that the internal metallic panel comprises a connection aperture opening on the connection element.

A furniture supporting assembly comprising an anchoring element arranged between the wooden panel and the external metallic panel or between the wooden panel portion and the internal metallic panel is especially advantageous as it allows distributing the tensile or compressive effort on the total thickness of the wall panel portion. The connection aperture of the metallic panel allows arranging a portion of the support member, and more particularly the anchoring element, between the external and the internal metallic plate, which allows the anchoring element to directly transmit force to the wooden panel portion while allowing connection of furniture on the connection element.

According to specific embodiments of the invention, the furniture supporting assembly further comprises one or several of the features mentioned below, considered independently or according to any technically possible combination:
- the connection element comprises a rail having a C-profile;
- the anchoring element is an anchoring plate;
- the thickness of the wooden panel perpendicularly to the anchoring element, between the anchoring element and the external metallic panel or between the anchoring element and the internal metallic panel, is superior to the thickness of the wooden panel peripherally to the anchoring element;
- the assembly comprises a glue layer arranged between the support member and the wooden panel, the glue layer connecting the support member to the wooden panel;
- the anchoring element is arranged between the wooden panel and the internal metallic panel, the wooden panel comprising a blind cavity housing the anchoring element and the connection element being arranged so that it extends through the connection aperture; and
- the anchoring element is arranged between the wooden panel and the external metallic panel, the wooden panel comprising a through cavity housing the anchoring element and the connection element.

The invention also relates to a furniture installation for a vehicle comprising the features of claim 8.

According to a specific embodiment of the invention, the furniture installation further comprises a cantilever seat connected to the first furniture supporting assembly and to the second furniture supporting assembly.

The invention also relates to a vehicle comprising a furniture installation as above mentioned.

Other features and advantages of the invention will become apparent from the exemplary detailed description which is given below, which is by no means to be interpreted as a limitation, with reference to the annexed figure which is a schematic section view of a furniture installation comprising a furniture supporting assembly according to the invention.

In the description, a compression, or compressive force or load, is an effort that tends to bring together two elements and in particular, the furniture piece and the wall panel. A tensile force or load is an effort that tend to bring apart two elements, and in particular the furniture piece and the wall panel.

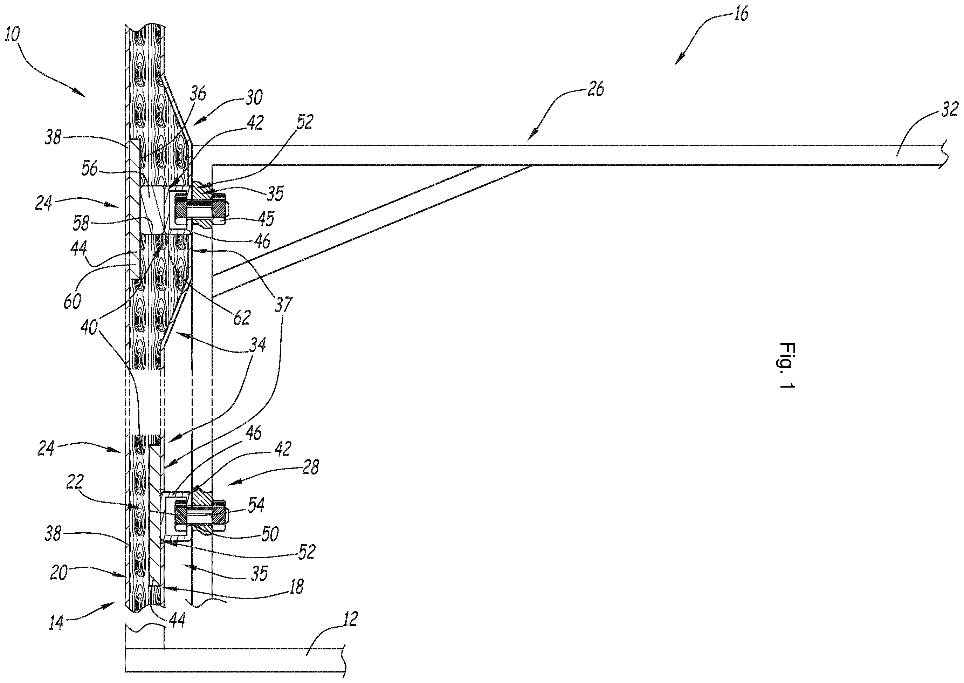

In reference to the figure 1, a vehicle 10 comprises a floor 12, a wall panel 14 and a furniture installation 16.

The vehicle 10 is for example a railway vehicle. The vehicle 10 is in particular a passenger railway vehicle such as a regional train, a metro or a tramway. As a variant, the vehicle 10 is a road vehicle, such as a bus, a maritime vehicle or an aircraft.

The floor 12 extends in the vehicle 10 and is adapted to support passengers of the vehicle 10.

The wall panel 14 extends upwards from the floor 12 of the vehicle. The wall panel 14 extends for example perpendicularly from the floor 12. The wall panel 14 defines for example, together with the floor 12, a cabin of the vehicle 10.

In a preferred embodiment, the wall panel 14 comprises an internal metallic layer 18, an external metallic layer 20 and a wooden plate 22.

The wooden plate 22 is preferably arranged between the internal metallic layer 18 and the external metallic layer 20. The wooden plate 22 connects the internal metallic layer 18 and the external metallic layer 20. The internal metallic layer 18 and the external metallic layer 20 cover two opposite sides of the wooden plate 22. The internal metallic layer 18 and the external metallic layer 20 are for example glued on two opposite sides of the wooden plate 22. The wall panel 14 is therefore a composite wood-metallic structure formed of the wooden plate 22 sandwiched between the internal metallic layer 18 and the external metallic layer 20.

The furniture installation 16 comprises at least one furniture supporting assembly 24 and one furniture piece 26. In the embodiment presented on the figure, the installation 16 comprises two furniture supporting assemblies 24: a first furniture supporting assembly 24 being a lower furniture supporting assembly 28 and a second furniture supporting assembly 24 being an upper furniture supporting assembly 30.

The furniture piece 26 is, in a specific example, a cantilever seat 32. The furniture piece 26, or, according to the specific example, the cantilever seat 32, is connected to the first furniture supporting assembly 24 corresponding to the lower furniture supporting assembly 28 and to the second furniture supporting assembly 24 corresponding to the upper furniture supporting assembly 30.

The cantilever seat 32 extends essentially parallel to the floor 12 and is exclusively connected to the vehicle 10 by the furniture supporting assembly or assemblies 24. The cantilever seat 32 is adapted to support at least the weight of a passenger (e.g. a load of 120kg), possibly the weight of at least two passengers (e.g. a load of 240kg).

The furniture supporting assembly 24 comprises a wall panel portion 34 and a support member 35. In a specific embodiment, the furniture supporting assembly 24 comprises a glue layer 36.

The wall panel portion 34 correspond to a portion of the wall panel 14.

The wall panel portion 34 comprises an internal metallic panel 37, an external metallic panel 38 and a wooden panel 40.

The internal metallic panel 37 corresponds to a portion of the internal metallic layer 18. The properties of the internal metallic layer 18 are therefore the same as the properties of the internal metallic panel 37.

The external metallic panel 38 corresponds to a portion of the external metallic layer 20. The properties of the external metallic layer 20 are therefore the same as the properties of the external metallic panel 38.

The internal metallic panel 37 and the external metallic panel 38 are for example formed from a metal taken from the list consisting of aluminium and its alloys and steel.

The thickness of the internal metallic panel 37 and of the external metallic panel 38 is for example comprised between 0.5 mm and 3 mm.

The wooden panel 40 corresponds to a portion of the wooden plate 22. The properties of the wooden plate 22 are therefore the same as the properties of the wooden panel 40.

As presented on the figure, the furniture installation may comprise two furniture supporting assemblies 24 and each wooden panel 40 of each furniture supporting assembly 24 may correspond to a portion of the same wooden plate 22. As a variant, the furniture installation may comprise two furniture supporting assemblies 24 and each wooden panel 40 of each furniture supporting assembly 24 may correspond to a portion of a different wooden plate 22.

The wooden panel 40 is arranged between the internal metallic panel 37 and the external metallic panel 38. The wooden panel 40 connects the internal metallic panel 37 and the external metallic panel 38. The wall panel portion 34 is therefore a composite wood-metallic structure formed of the wooden panel 40 sandwiched between internal metallic panel 37 and the external metallic panel 38.

The wooden panel 40 is for example formed from a single block of wood. As a variant, the wooden panel 40 is formed from an assembly of wood fragments, such as for example a wood agglomerate or plywood.

The wooden panel 40 is for example formed from wood taken from the list consisting of: beech, balsa processed to board or plywood semi-finished products.

The support member 35 is adapted to support the furniture piece 26.

The support member 35 comprises a connection element 42 and an anchoring element 44. The connection element 42 is connected to the anchoring element 44.

The support member 35 is preferably metallic and is for example formed from aluminium.

The connection element 42 is adapted to host fixation members of the furniture piece 26. The fixation members of the furniture piece 26 are for example bolts 45 that comprise a head that is adapted to be inserted in the connection element 42.

The connection element 42 comprises for example a rail 46 having a C-profile. The rail 46 extends preferably parallel to the floor 12. The C-profile of the rail 46 is visible on the figure. The C-profile comprises a back, facing the external metallic panel 38, main projections extending in a direction opposite to the direction directed to the metallic panel 38, the main projections extending perpendicular to the external metallic panel 38, and secondary projections extending parallel to the back of the C profile, each secondary projections extending towards each other, the secondary projections defining between them an insertion slot 50.

The back of the C-profile is connected to the anchoring element 44, the anchoring element between arranged between the rail 46 and the external metallic panel 38.

The internal metallic panel 37 comprises a connection aperture 52 opening on the connection element 42.

The connection aperture 52 allows the access to the connection element 42 through the internal metallic panel 37. When the connection element 42 comprises a rail 46 having a C-profile, the connection aperture 52 allows the access to the insertion slot 50 from the external metallic pane 38 side of the wall panel portion 34.

The anchoring element 44 is arranged between the wooden panel 40 and the external metallic panel 38 or between the wooden plate 40 and the internal metallic panel 37.

The anchoring element 44 is preferably an anchoring plate. The anchoring element extends preferably parallel to a wall plane along which extends the wall panel portion 34.

In the embodiment where the anchoring element 44 is an anchoring plate, the anchoring element 44 has a thickness preferably comprised between 1 mm and 5 mm and an area preferably comprised between 0,025 m² and 0,2 m².

The thickness of the wooden panel 40 taken perpendicularly to the anchoring element 44, between the anchoring element and the external metallic panel 38 or between the anchoring element 44 and the internal metallic panel 37, is for example superior to the thickness of the wooden panel 40 at the locations peripheral of the anchoring element 44. In other words, the wooden panel 40 may protrude perpendicularly to the anchoring element 44. In other words, the section of the wooden panel 40 extending on the anchoring element 44 may thus be thicker than the section of the wooden panel 40 extending around the anchoring element 44.

In particular, in the example presented in the figure, the thickness of the wooden panel 40 of the upper furniture supporting assembly 30 taken perpendicularly to the anchoring element 44, between the anchoring element 44 and the internal metallic panel 37 is superior to the thickness of the wooden panel 40 peripherally around the anchoring element 44. The thickness of the wooden panel 40 of the lower furniture supporting assembly 28 taken perpendicularly to the anchoring element 44, between the anchoring element 44 and the external metallic panel 38 is however not superior to the thickness of the wooden panel 40 taken peripherally to the anchoring element 44 in the example presented in the figure. The thickness of the wooden panel 40 perpendicularly to the anchoring element 44 is for example comprised between 15 mm and 75 mm while the thickness of the wooden panel 40 peripherally to the anchoring element 44 is for example comprised between 10 mm and 50 mm. It will be understood that the thickness peripherally to the anchoring element corresponds to a thickness of the wooden panel 40 between the internal metallic panel 37 and the external metallic panel 38, on the sides of the anchoring element 44. In a specific embodiment, the thickness peripherally to the anchoring element corresponds to a thickness of the wooden panel 40 between the internal metallic panel 37 and the external metallic panel 38, offset from at least 5 cm of the anchoring element 44.

The glue layer 36 is disposed between the support member 35 and the wooden panel 40. The glue layer 36 fixes the support member 35 to the wooden panel 40.

The glue layer 36 is for example formed from a structural glue system.

A more detailed description of the first supporting assembly 24, also referred as lower furniture supporting assembly 28, is presented hereinafter. The anchoring element 44 is arranged between the wooden panel 40 and the internal metallic panel 37.

The anchoring element 44 is directly connected to the connection element 42, the anchoring element 44 and the connection element 42 being for example welded to one another.

The wooden panel 40 comprises a blind cavity 54 housing the anchoring element 44. The shape of the blind cavity 54 is for example the same as the shape of the anchoring element 44.

The connection aperture 52 opens on the connection element 42, and more particularly towards the connection element 42 so that the connection element 42 extends through the connection aperture 52. The connection element 42 protrudes for example from the internal metallic panel 37, on the side of the internal metallic panel 37 opposed to the wooden panel 44.

A more detailed description of the second supporting assembly 24, also referred as upper furniture supporting assembly 30, is presented hereinafter.

The anchoring element 44 is arranged between the wooden panel 40 and the external metallic panel 37.

The furniture supporting assembly 24 comprises a spacing element 56 that connects the anchoring element 44 with the connection element 42. The anchoring element 44 and the connection element 42 are both directly connected to the spacing element 56. The anchoring element 44 and the connection element 42 are for example welded to the spacing element 56.

The spacing element 56 is for example a beam extending between the anchoring element 44 and the connection element 42.

The wooden panel 40 comprises a through cavity 58.

The through cavity 58 hosts the anchoring element 44 and the connection element 42. In particular, the through cavity 58 comprises a first section 60, housing the anchoring element 44 and a second section 62, housing the connection element 42 and, as presented in the figure, the spacing element 56.

The connection aperture 52 opens on the connection element 42 so that the furniture element 26 is attached to the connection element 42 through the connection aperture 52. In a first variant, as presented on the figure the connection element 42 traverses the connection aperture 52. The connection element 42 may protrude from the internal metallic panel 37, on the side of the internal metallic panel 37 opposed to the wooden panel 40 (not represented) or may be flush with the side of the internal metallic panel 37 opposed to the wooden panel 40, as presented in the figure. In a second variant (not represented), the connection element 42 is disposed between the internal metallic panel 37 and the external metallic panel 38, in the through cavity 58, the furniture piece 26, and for example fixation members of the furniture piece 26 being connected to the connection element 42 through the connection aperture 52. In this second variant, the external metallic panel 38 may partially cover the connection element 42, for example extending on the secondary projections when the connection element 42 is a rail 46 as previously described.

The way of operation of a furniture supporting assembly 24, and more particularly, of a furniture installation 16 comprising a first furniture supporting assembly 24, corresponding to a lower furniture supporting assembly 28, and a second furniture supporting assembly 24, corresponding to an upper furniture supporting assembly 30, will now be described.

Any person or object disposed on a furniture piece 26 generates loads that are applied to each furniture supporting assembly 24. In the embodiment of the furniture installation 16 presented in the figure, furniture piece 26, corresponding to a cantilever seat 32, applies mostly compressive loads on the lower supporting assembly 28 and mostly tensile loads on the upper supporting assembly 30.

The load applied on the furniture piece 26, for example by a passenger sitting on the furniture piece 26, is transmitted to the connection element 42, for example by fixation members of the furniture piece 26, that are illustrated by bolts 45 on the figure.

The load applied on the connection element 42 is then transmitted to the anchoring element 44 before being distributed on the wooden panel 40 by the anchoring element 44.

As presented on the figure, the anchoring element 44 of the lower supporting assembly 28 is arranged between the wooden panel 40 and the internal metallic panel 37 so that the anchoring element 44 distributes the compressive force on the whole thickness of the wooden panel 40 and of the external metallic panel 38.

As presented on the figure, the anchoring element 44 of the upper supporting assembly 30 is arranged between the wooden panel 40 and the external metallic panel 38 so that the anchoring element 44 distributes the tensile force on the whole thickness of the wooden panel 40 and of the internal metallic panel 37.

The position of the anchoring element 44, between the wooden panel 40 and the internal metallic panel 37 or between the wooden panel 40 and the external metallic panel 38 is especially advantageous as it results in a robust furniture supporting assembly 24, that is adapted either to compressive or to tensile loads. In particular, a furniture supporting assembly 24 comprising an anchoring element 44 arranged between the internal metallic panel 37 and the wooden panel 40 is particularly adapted to support compressive loads generated by the furniture piece 26 and a furniture supporting assembly 24 comprising an anchoring element 44 arranged between the external metallic panel 38 and the wooden panel 44 is particularly adapted to support tensile loads generated by the furniture piece 26. The combined use of a first furniture supporting assembly 24 wherein the anchoring element 44 is arranged between the internal metallic panel 37 and the wooden panel 40 and of a second furniture supporting assembly 24 wherein the anchoring element 44 is arranged between the external metallic panel 38 and the wooden panel 44 is particularly adapted to carry cantilever seats 32, that are particularly appreciated for their efficient use of space in the vehicle 10.

The use of a C-profile is advantageous by allowing easy attachment of the furniture piece 26 on a wall panel 14, and especially to adapt the position of the furniture piece 26 relatively to the rest of the vehicle 10.

The use of an anchoring plate as an anchoring element 44 improves the load distribution in the furniture supporting assembly 24, improving the robustness of such furniture supporting assembly 24.

The increased thickness perpendicularly to the anchoring element 44 is especially useful for further improving the load distribution in the furniture supporting assembly 24, further improving the robustness of such furniture supporting assembly 24.

## Claims

1. Furniture supporting assembly (24) for a vehicle (10), the furniture supporting assembly (24) comprising:
- a wall panel portion (34), comprising:
- an external metallic panel (38),
- an internal metallic panel (37), and
- a wooden panel (40), arranged between the internal metallic panel (37) and the external metallic panel (38) and connecting the internal metallic panel (37) and the external metallic panel (38); **characterized by**
- a support member (35), adapted to support a furniture piece (26) and comprising :
- a connection element (42), and
- an anchoring element (44) connected to the connection element (42) and to the wall panel portion (34),
wherein the anchoring element (44) is arranged between the wooden panel (40) and the external metallic panel (38) or between the wooden plate (40) and the internal metallic panel (37), and in that the internal metallic panel (37) comprises a connection aperture (52) opening on the connection element (42).

2. Furniture supporting assembly (24) according to claim 1, wherein the connection element (42) comprises a rail (42) having a C-profile.

3. Furniture supporting assembly (24) according to claim 1 or 2, wherein the anchoring element (44) is an anchoring plate.

4. Furniture supporting assembly (24) according any of the preceding claims, wherein the thickness of the wooden panel (40) perpendicularly to the anchoring element (44), between the anchoring element (44) and the external metallic panel (38) or between the anchoring element (44) and the internal metallic panel (37), is superior to the thickness of the wooden panel (40) peripherally to the anchoring element (44).

5. Furniture supporting assembly (24) according any of the preceding claims, wherein the assembly comprises a glue layer (36) arranged between the support member (35) and the wooden panel (40), the glue layer (36) connecting the support member (35) to the wooden panel (40).

6. Furniture supporting assembly (24) according to any of the preceding claims, wherein the anchoring element (44) is arranged between the wooden panel (40) and the internal metallic panel (37), the wooden panel (40) comprising a blind cavity (54) housing the anchoring element (44) and the connection element (42) being arranged so that it extends through the connection aperture (52).

7. Furniture supporting assembly (24) according to any of the claims 1 to 5, wherein the anchoring element (44) is arranged between the wooden panel (40) and the external metallic panel (38), the wooden panel (40) comprising a through cavity (58) housing the anchoring element (44) and the connection element (42).

8. Furniture installation (16) for a vehicle (10) comprising one first furniture supporting assembly (24) according to claim 6 and one second furniture supporting assembly (24) according to claim 7, the furniture installation (16) further comprising a wall panel (14) configured to extend upwards from a floor (12) of the vehicle (10), the wall panel portion (34) of the first furniture supporting assembly (24) corresponding to a portion of the wall panel (14) closer to the floor (12) than the portion of the wall panel (14) corresponding to the wall panel portion (34) of the second furniture supporting assembly (24).

9. Furniture installation (16) according to claim 8, comprising a cantilever seat (32) connected to the first furniture supporting assembly (24) and to the second furniture supporting assembly (24).

10. Vehicle (10) comprising a furniture installation (16) according to claim 8 or 9.

## Patentansprüche

1. Möbelträgeranordnung (24) für ein Fahrzeug (10), die Möbelträgeranordnung (24) umfassend:
- einen Wandplattenabschnitt (34), umfassend:
- eine äußere Metallplatte (38),
- eine innere Metallplatte (37), und
- eine Holzplatte (40), die zwischen der inneren Metallplatte (37) und der äußeren Metallplatte (38) angeordnet ist und die innere Metallplatte (37) und die äußere Metallplatte (38) verbindet; **gekennzeichnet durch**
- ein Trägerelement (35), das zum Tragen eines Möbelstücks (26) geeignet ist und umfassend:
- ein Verbindungselement (42), und
- ein Verankerungselement (44), das mit dem Verbindungselement (42) und dem Wandplattenabschnitt (34) verbunden ist,
wobei das Verankerungselement (44) zwischen der Holzplatte (40) und der äußeren Metallplatte (38) oder zwischen der Holzplatte (40) und der inneren Metallplatte (37) angeordnet ist, und dass die innere Metallplatte (37) eine Verbindungsöffnung (52) aufweist, die an dem Verbindungselement (42) öffnet.

2. Möbelträgeranordnung (24) nach Anspruch 1, wobei das Verbindungselement (42) eine Schiene (42) umfasst, die ein C-Profil aufweist.

3. Möbelträgeranordnung (24) nach Anspruch 1 oder 2, wobei das Verankerungselement (44) eine Verankerungsplatte ist.

4. Möbelträgeranordnung (24) nach einem der vorherigen Ansprüche, wobei die Stärke der Holzplatte (40) senkrecht zu dem Verankerungselement (44), zwischen dem Verankerungselement (44) und der äußeren Metallplatte (38) oder zwischen dem Verankerungselement (44) und der inneren Metallplatte (37), größer ist als die Stärke der Holzplatte (40) am Umfang des Verankerungselements (44).

5. Möbelträgeranordnung (24) nach einem der vorherigen Ansprüche, wobei die Anordnung eine Leimschicht (36) umfasst, die zwischen dem Trägerelement (35) und der Holzplatte (40) angeordnet ist, wobei die Leimschicht (36) das Trägerelement (35) mit der Holzplatte (40) verbindet.

6. Möbelträgeranordnung (24) nach einem der vorherigen Ansprüche, wobei das Verankerungselement (44) zwischen der Holzplatte (40) und der inneren Metallplatte (37) angeordnet ist, wobei die Holzplatte (40) einen Blindhohlraum (54) aufweist, der das Verankerungselement (44) aufnimmt, und das Verbindungselement (42) angeordnet ist, um sich durch die Verbindungsöffnung (52) zu erstrecken.

7. Möbelträgeranordnung (24) nach einem der Ansprüche 1 bis 5, wobei das Verankerungselement (44) zwischen der Holzplatte (40) und der äußeren Metallplatte (38) angeordnet ist, wobei die Holzplatte (40) einen durchgehenden Hohlraum (58) aufweist, der das Verankerungselement (44) und das Verbindungselement (42) aufnimmt.

8. Möbelinstallation (16) für ein Fahrzeug (10), umfassend eine erste Möbelträgeranordnung (24) nach Anspruch 6 und eine zweite Möbelträgeranordnung (24) nach Anspruch 7, wobei die Möbelinstallation (16) ferner eine Wandplatte (14) umfasst, die konfiguriert ist, um sich von einem Boden (12) des Fahrzeugs (10) nach oben zu erstrecken, wobei der Wandplattenabschnitt (34) der ersten Möbelträgeranordnung (24) einem Abschnitt der Wandplatte (14) entspricht, der näher an dem Boden (12) ist als der Abschnitt der Wandplatte (14), der dem Wandplattenabschnitt (34) der zweiten Möbelträgeranordnung (24) entspricht.

9. Möbelinstallation (16) nach Anspruch 8, umfassend einen freitragenden Sitz (32), der mit der ersten Möbelträgeranordnung (24) und mit der zweiten Möbelträgeranordnung (24) verbunden ist.

10. Fahrzeug (10), umfassend eine Möbelinstallation (16) nach Anspruch 8 oder 9.

## Revendications

1. Ensemble de support de meuble (24) pour un véhicule (10), l'ensemble de support de meuble (24) comprenant :
- une partie de panneau mural (34), comprenant :
- un panneau métallique externe (38),
- un panneau métallique interne (37), et
- un panneau en bois (40), agencé entre le panneau métallique interne (37) et le panneau métallique externe (38) et reliant le panneau métallique interne (37) et le panneau métallique externe (38) ; **caractérisé par**
- un élément de support (35), adapté pour supporter un meuble (26) et comprenant :
- un élément de liaison (42) et
- un élément d'ancrage (44) relié à l'élément de liaison (42) et à la partie de panneau mural (34),
dans lequel l'élément d'ancrage (44) est agencé entre le panneau en bois (40) et le panneau métallique externe (38) ou entre le panneau en bois (40) et le panneau métallique interne (37), et en ce que le panneau métallique interne (37) comprend une ouverture de liaison (52) s'ouvrant sur l'élément de liaison (42).

2. Ensemble de support de meuble (24) selon la revendication 1, dans lequel l'élément de liaison (42) comprend un rail (42) ayant un profil en C.

3. Ensemble de support de meuble (24) selon la revendication 1 ou 2, dans lequel l'élément d'ancrage (44) est une plaque d'ancrage.

4. Ensemble de support de meuble (24) selon l'une quelconque des revendications précédentes, dans lequel l'épaisseur du panneau en bois (40) perpendiculairement à l'élément d'ancrage (44), entre l'élément d'ancrage (44) et le panneau métallique externe (38) ou entre l'élément d'ancrage (44) et le panneau métallique interne (37), est supérieure à l'épaisseur du panneau en bois (40) en périphérie de l'élément d'ancrage (44).

5. Ensemble de support de meuble (24) selon l'une quelconque des revendications précédentes, dans lequel l'ensemble comprend une couche de colle (36) agencée entre l'élément de support (35) et le panneau en bois (40), la couche de colle (36) reliant l'élément de support (35) au panneau en bois (40).

6. Ensemble de support de meuble (24) selon l'une quelconque des revendications précédentes, dans lequel l'élément d'ancrage (44) est agencé entre le panneau en bois (40) et le panneau métallique interne (37), le panneau en bois (40) comprenant une cavité borgne (54) abritant l'élément d'ancrage (44) et l'élément de liaison (42) étant agencé de manière à s'étendre à travers l'ouverture de liaison (52).

7. Ensemble de support de meuble (24) selon l'une quelconque des revendications 1 à 5, dans lequel l'élément d'ancrage (44) est agencé entre le panneau en bois (40) et le panneau métallique externe (38), le panneau en bois (40) comprenant une cavité traversante (58) abritant l'élément d'ancrage (44) et l'élément de liaison (42).

8. Installation de meuble (16) pour un véhicule (10) comprenant un premier ensemble de support de meuble (24) selon la revendication 6 et un second ensemble de support de meuble (24) selon la revendication 7, l'installation de meuble (16) comprenant en outre un panneau mural (14) configuré pour s'étendre vers le haut à partir d'un plancher (12) du véhicule (10), la partie de panneau mural (34) du premier ensemble de support de meuble (24) correspondant à une partie du panneau mural (14) plus proche du plancher (12) que la partie de panneau mural (14) correspondant à la partie de panneau mural (34) du second ensemble de support de meuble (24).

9. Installation de meuble (16) selon la revendication 8, comprenant un siège en porte-à-faux (32) relié au premier ensemble de support de meuble (24) et au second ensemble de support de meuble (24).

10. Véhicule (10) comprenant une installation de meuble (16) selon la revendication 8 ou 9.
